# EUROPÄISCHE PATENTSCHRIFT

(11) **EP 2 288 493 B1**
(45) Veröffentlichungstag und Bekanntmachung des Hinweises auf die Patenterteilung: **25.03.2015**
(21) Anmeldenummer: 09761598.3
(22) Anmeldetag: 26.05.2009
(51) Int. Cl.: B32B 3/24, B32B 5/18, B32B 9/04, B32B 27/06, B32B 27/30, B32B 27/40, B32B 27/20, B32B 27/26

(54) **MEHRSCHICHTIGE VERBUNDMATERIALIEN, DIE EINE WASSERDAMPFDURCHLÄSSIGE KUNSTSTOFFFOLIE UMFASSEN, VERFAHREN ZU IHRER HERSTELLUNG UND IHRE VERWENDUNG**
MULTILAYER COMPOSITE MATERIALS WHICH COMPRISE A PLASTICS FOIL PERMEABLE TO WATER VAPOUR, METHOD FOR PRODUCTION OF THE SAME AND USE OF THE SAME
MATÉRIAUX COMPOSITES MULTICOUCHES COMPORTANT UN FILM DE MATIÈRE PLASTIQUE PERMÉABLE À LA VAPEUR D'EAU, AINSI QUE LEURS PROCÉDÉS DE FABRICATION ET D'UTILISATION

(30) Priorität: 09.06.2008 EP 08157860
(43) Veröffentlichungstag der Anmeldung: 02.03.2011
(73) Patentinhaber: BASF SE, 67056 Ludwigshafen (DE)
(72) Erfinder: JOKISCH, Carl, 68259 Mannheim (DE); WEISER, Jürgen, 69198 Schriesheim (DE)
(86) Internationale Anmeldenummer: PCT/EP2009/056336
(87) Internationale Veröffentlichungsnummer: WO 2009/150035

(56) Entgegenhaltungen:
- WO-A-2005/047549
- WO-A-2008/077785
- DE-A1- 19 625 389
- US-A1- 2002 019 187
- DATABASE WPI Week 200480, Derwent Publications Ltd., London, GB; AN 2004-807248 -& JP 2004 315817 A (SEIREN CO LTD) 11 November 2004

## Beschreibung

Die vorliegende Erfindung betrifft mehrschichtige Verbundmaterialien, umfassend als Komponenten:
(A) eine wasserdampfdurchlässige Kunststofffolie,
(B) gegebenenfalls mindestens eine Verbindungsschicht und
(C) eine Polyurethanschicht, die Kapillaren aufweist, die über die gesamte Dicke der Polyurethanschicht gehen.

Wasserdampfdurchlässige Kunststofffolien sind Bestandteil von zahlreichen hochwertigen Materialien, insbesondere von Bekleidungsstücken. Beispiele sind die als Sympatex und Goretex bekannten wasserdampfdurchlässigen Kunststofffolien. Dabei können unterschiedliche Materialien den Wasserdampf nach unterschiedlichen Mechanismen durchlassen.

Will man Oberbekleidung unter Verwendung von wasserdampfdurchlässigen Kunststofffolien herstellen, so stellt sich In vielen Fällen die Aufgabe, ein Obermaterial zu finden, was den ästhetischen Ansprüchen der Verbraucher an Optik und Haptik genügt und sich gut mit der betreffenden wasserdampfdurchlässigen Kunststoffolie verbinden lässt, ohne in den vorteilhaflen Eigenschaften beeinträchtigt zu werden.

Narbenleder und Wildleder weisen zwar eine attraktive Optik und Haptik auf, sind aber in der Regel sehr teuer, und die Atmungsaktivität lässt in vielen Fällen zu wünsche übrig. Nubukleder weist zwar eine angenehme Haptik auf, ist aber in der Regel empfindlich und weist schlechte physikalische Echtheiten auf.

DE 19625389 A1 offenbart ein mehrschichtiges, wasserdampfdurchlässiges Verbundmaterial zur Verwendung in Kleidungsstücken, umfassend eine erste Schicht aus mikroporösem Polytetrafluorethylen, eine Schicht aus nicht-porösem, jedoch hydrophilem Polyurethan, und eine zweite Schicht aus mikroporösem Polytetrafluorethylen, welche miteinander durch Verkleben verbunden werden können. Ferner wird ausgeführt, dass Schichten aus mikroporösem Polyurethan geeignet sind, eine Schicht aus mikroporösem Polytetrafluorethylen zu ersetzen.

US 2002/019187 A offenbart ein mehrschichtiges, wasserdampfdurchlässiges Verbundmaterial zur Verwendung in Kleidungsstücken oder für Verpackungen, umfassend eine erste Schicht aus nicht-porösem, aber offenbar hydrophilem Block-Copolyester oder Polyurethan sowie eine zweite Schicht aus mikroporösem Block-Copolyester oder Polyurethan.

JP 2004 315817 A, sich unter anderem ebenfalls befassend mit der Herstellung von mehrschichtigen, wasserdampfdurchlässigen Verbundmaterialien etwa zur Verwendung in Kleidungsstücken, offenbart mikroporöse Polyurethanfilme, die Kapillaren mit einem Durchmesser von 0,010 mm oder weniger aufweisen, welche sich über die gesamte Dicke dieser Polyurethanfilme erstrecken.

WO 2005/047549 A1 beschreibt an ihrer Sichtseite mit einer eine Narbenstruktur aufweisenden Zurichtung versehene, eine velourartige, feinfaserige Oberseite aufweisende Träger.

Es bestand also die Aufgabe, wasserdampfdurchlässige Kunststofffolien so zu verarbeiten, dass sie ihre wasserdampfdurchlässigen Eigenschaften behalten, dennoch aber ein ansprechendes optisches Äußeres und eine angenehme Haptik aufweisen. Weiterhin bestand die Aufgabe, Verwendungen für derartig verarbeitete wasserdampfdurchlässige Kunststofffolien bereit zu stellen.

Dementsprechend wurden die eingangs definierten mehrschichtigen Verbundmaterialien gefunden. Sie umfassen als Komponenten:
(A) eine wasserdampfdurchlässige Kunststofffolie,
(B) gegebenenfalls mindestens eine Verbindungsschicht und
(C) eine Polyurethanschicht, die Kapillaren aufweist, die über die gesamte Dicke der Polyurethanschicht gehen.

Unter wasserdampfdurchlässigen Kunststofffolien (A), im Rahmen der vorliegenden Anmeldung auch kurz als Folie (A)bezeichnet, versteht man Im Rahmen der vorliegenden Erfindung Flächengebilde aus synthetischem Polymer, die eine Dicke von 0.5 µm bis 1 mm, vorzugsweise 1 µm bis 0,5 mm und besonders bevorzugt 5 µm bis 0,05 mm aufweisen können. Dabei umfasst der Begriff Polymer im Rahmen der vorliegenden Erfindung auch Copolymere.

Unter "wasserdampfdurchlässig" wird im Rahmen der vorliegenden Erfindung Material verstanden, das eine Wasserdampfdurchlässigkeit (WDD) vom mehr als 1 mg/cm²h nach DIN 53333 aufweist.

In einer Ausführungsform der vorliegenden Erfindung handelt es sich bei wasserdampfdurchlässigen Kunststofffollen (A) um solche, die undurchlässig gegenüber Wasser im flüssigen Aggregatszustand sind. Dabei soll "undurchlässig gegenüber Wasser im flüssigen Aggregatszustand' bei Atmosphärendruck oder maximal 2 Atmosphären Druck bestimmt werden.

Unter Kunststoffen sind im Rahmen der vorliegenden Erfindung fluorierte, Polyolefine, bevorzugt perfluorierte Polyolefine wie beispielsweise Polytetrafluorethylen und Copolymere von Tetrafluorethylen mit anderen Fluor-haltigen Comonomeren, insbesondere Hexafluorpropylen, zu verstehen.

Wasserdampfdurchlässige Kunststofffolien (A) aus fluoriertem Polyolefin kann man insbesondere durch mechanisches Recken wasserdampfdurchlässig machen, Wasserdampfdurchlässige Kunststofffolien (A) aus fluoriertem Polyolefin können Poren mit einem mittleren Durchmesser im Bereich von 1 bis 50 µm aufweisen, insbesondere von etwa 10 µm.

In einer Ausführungsform der vorliegenden Erfindung weist Folie (A) einen amorphen Anteil von etwa 5% oder mehr auf.

Beispiele zur Herstellung von gereckten Folien (A) und deren Herstellung sind in US 3,953,566 aufgeführt.

In einer anderen Ausführungsform der vorliegenden Erfindung sind unter Folien (A) solche aus Polyester, vorzugsweise chemisch modifizierte Polyester zu verstehen.

Dabei handelt es sich bei chemisch modifizierten Polyestern Insbesondere um hydrophil modifizierte Polyester, die beispielsweise durch Einbau von einem oder mehreren Polyethern wie Diethylenglykol, Triethylenglykol, Tetraethylenglykol oder Polyethylenglykol hydrophil modifiziert sind. Man kann auch von Polyetherpolyestern sprechen.

Das Material, aus dem Folie (A) ist, ist verschieden von dem Material, aus dem Polyurethanschicht (C) ist.

Erfindungsgemäßes mehrschichtiges Verbundmaterial umfasst weiterhin mindestens eine Polyurethanschicht (C), die Kapillaren aufweist, die über die gesamte Dicke der Polyurethanschicht gehen. Polyurethanschicht (C), die Kapillaren aufweist, die über die gesamte Dicke der Polyurethanschicht gehen, wird im Rahmen der vorliegenden Erfindung auch kurz als Polyurethanschicht (C) bezeichnet.

In einer Ausführungsform der vorliegenden Erfindung weist Polyurethanschicht (C) eine mittlere Dicke im Bereich von 15 bis 300 µm, bevorzugt von 20 bis 150 µm, besonders bevorzugt von 25 bis 80 µm auf.

In einer Ausführungsform der vorliegenden Erfindung weist Polyurethanschicht (C) im Mittel mindestens 100, bevorzugt mindestens 250 Kapillaren pro 100 cm² auf.

In der vorliegenden Erfindung weisen die Kapillaren einen mittleren Durchmesser im Bereich von 0,005 bis 0,05 mm, bevorzugt 0,009 bis 0,03 mm auf.

In einer Ausführungsform der vorliegenden Erfindung sind die Kapillaren gleichmäßig über Polyurethanschicht (C) verteilt. In einer bevorzugten Ausführungsform der vorliegenden Erfindung sind die Kapillaren jedoch ungleichmäßig über die Polyurethanschicht (C) verteilt.

In einer Ausführungsform der vorliegenden Erfindung sind die Kapillaren im Wesentlichen gebogen. In einer anderen Ausführungsform der vorliegenden Erfindung weisen die Kapillaren einen im Wesentlichen gradlinigen Verlauf auf.

Die Kapillaren verleihen der Polyurethanschicht (C) eine Luft- und Wasserdampfdurchlässigkeit, ohne dass eine Perforierung erforderlich wäre. In einer Ausführungsform der vorliegenden Erfindung kann die Wasserdampfdurchlässigkeit der Polyurethanschicht (C) über 1,5 mg/cm²·h liegen, gemessen nach DIN 53333. So ist es möglich, dass Feuchtigkeit wie beispielsweise Schweiß durch die Polyurethanschicht (C) hindurch migrieren kann.

In einer Ausführungsform der vorliegenden Erfindung weist Polyurethanschicht (C) zusätzlich zu den Kapillaren noch Poren auf, die nicht über die gesamte Dicke der Polyurethanschicht (C) gehen.

In einer Ausführungsform weist Polyurethanschicht (C) eine Musterung auf. Die Musterung kann beliebig sein und beispielsweise die Musterung eines Leders oder einer Holzoberfläche wiedergeben. In einer Ausführungsform der vorliegenden Erfindung kann die Musterung ein Nubukleder wiedergeben.

In einer Ausführungsform der vorliegenden Erfindung weist Polyurethanschicht (C) eine samtartige Erscheinung auf.

In einer Ausführungsform der vorliegenden Erfindung kann die Musterung einer Samtoberfläche entsprechen, beispielsweise mit Härchen mit einer mittleren Länge von 20 bis 500 µm, bevorzugt 30 bis 200 µm und besonders bevorzugt 60 bis 100 µm. Die Härchen können beispielsweise einen kreisförmigen Durchmesser aufweisen. In einer besonderen Ausführungsform der vorliegenden Erfindung haben die Härchen eine kegelförmige Form.

In einer Ausführungsform der vorliegenden Erfindung weist Polyurethanschicht (C) Härchen auf, die in einem mittleren Abstand von 50 bis 350, bevorzugt 100 bis 250 µm zueinander angeordnet sind.

Für den Fall, dass die Polyurethanschicht (C) Härchen aufweist, beziehen sich die Angaben über die mittlere Dicke auf die Polyurethanschicht (C) ohne die Härchen.

Die Polyurethanschicht (C) ist mit Folie (A) vorzugsweise über mindestens eine Verbindungsschicht (B) verbunden.

Bei Verbindungsschicht (B) kann es sich um eine durchbrochene, das heißt nicht vollflächig, ausgeprägte Schicht handeln, vorzugsweise eines gehärteten organischen Klebstoffs.

In einer Ausführungsform der vorliegenden Erfindung handelt es sich bei Verbindungsschicht (B) um eine punktförmig, streifenförmig oder gitterförmig, beispielsweise in Form von Rauten, Rechtecken, Quadraten oder einer Bienenwabenstruktur aufgebrachte Schicht. Dann kommt Polyurethanschicht (C) mit Folie (A) an den Lücken der Verbindungsschicht (B) in Berührung.

In einer Ausführungsform der vorliegenden Erfindung handelt es sich bei Verbindungsschicht (B) um eine Schicht eines gehärteten organischen Klebstoffs, beispielsweise auf Basis von Polyvinylacetat, Polyacrylat oder insbesondere Polyurethan, vorzugsweise von Polyurethanen mit einer Glastemperatur unter 0°C.

Dabei kann die Härtung des organischen Klebstoffs beispielsweise thermisch, durch aktinische Strahlung oder durch Altern erfolgt sein.

In einer anderen Ausführungsform der vorliegenden Erfindung handelt es sich bei Verbindungsschicht (B) um ein Klebenetz.

In einer Ausführungsform der vorliegenden Erfindung weist Verbindungsschicht (B) eine maximale Dicke von 100 µm, bevorzugt 50 µm, besonders bevorzugt 30 µm, ganz besonders bevorzugt 15 µm auf.

In einer Ausführungsform der vorliegenden Erfindung kann Verbindungsschicht (B) Mikrohohlkugeln enthalten. Unter Mikrohohlkugeln sind im Rahmen der vorliegenden Erfindung kugelförmige Partikel mit einem mittleren Durchmesser im Bereich von 5 bis 20 µm aus polymerem Material, insbesondre aus halogeniertem Polymer wie beispielsweise Polyvinylchlorid oder Polyvinylidenchlorid oder Copolymer von Vinylchlorid mit Vinylidenchlorid, zu verstehen. Mikrohohlkugeln können leer sein oder vorzugsweise gefüllt mit einer Substanz, deren Siedepunkt geringfügig tiefer liegt als die Zimmertemperatur, beispielsweise mit n-Butan und insbesondere mit Isobutan.

In einer Ausführungsform der vorliegenden Erfindung kann Polyurethanschicht (C) mit Folie (A) über mindestens zwei Verbindungsschichten (B) verbunden sein, die eine gleiche oder unterschiedliche Zusammensetzung aufweisen. So kann die eine Verbindungsschicht (B) ein Pigment enthalten und die andere Verbindungsschicht (B) pigmentfrei sein.

In einer Variante kann die eine Verbindungsschicht (B) Mikrohohlkugeln enthalten und die andere Verbindungsschicht (B) nicht.

In einer Ausführungsform der vorliegenden Erfindung kann erfindungsgemäßes mehrschichtiges Verbundmaterial keine weiteren Schichten aufweisen. In einer anderen Ausführungsform der vorliegenden Erfindung kann erfindungsgemäßes mehrschichtiges Verbundmaterial mindestens eine Zwischenschicht (D) umfassen, die zwischen Folie (A) und Verbindungsschicht (B), zwischen Verbindungsschicht (B) und Polyurethanschicht (C) oder zwischen zwei Verbindungsschichten (B), die gleich oder verschieden sein können, liegt. Dabei wird Zwischenschicht (D) gewählt aus Leder, Textil, Papier, Kunstleder, offenzelliger Polyurethanschaum, Textil-geträgertem offenporigem Polyurethan und Vliesstoffen (Non-wovens), wobei Vliesstoffe beispielsweise gewählt werden aus synthetischen Materialien wie Polypropylen oder Polyurethan, insbesondere sind Vliesstoffe aus thermoplastischem Polyurethan.

Matrizen sind keine Ausführungsformen von Zwischenschichten (D) im Rahmen der vorliegenden Erfindung.

In den Ausführungsformen, in denen erfindungsgemäßes mehrschichtiges Verbundmaterial mindestens eine Zwischenschicht (D) aufweist, kommt Polyurethanschicht (C) vorzugsweise nicht direkt mit Folie (A) in Berührung, sondern mit Zwischenschicht (D).

In einer Ausführungsform der vorliegenden Erfindung kann Zwischenschicht (D) einen mittleren Durchmesser (Dicke) im Bereich von 0,05 mm bis 5 cm, bevorzugt 0,1 mm bis 0,5 cm, besonders bevorzugt 0,2 mm bis 2 mm aufweisen.

Vorzugsweise weist Zwischenschicht (D) eine Wasserdampfdurchlässigkeit im Bereich von größer als 1,5 mg/cm²·h auf, gemessen nach DIN 53333.

Zwischenschicht (D) kann man mit einem oder mehreren der übrigen Bestandteile beispielsweise durch Verkleben, Nadeln, Vernähen oder Versteppen verbinden,

Erfindungsgemäße mehrschichtige Verbundmaterialien weisen eine hohe mechanische Festigkeit und Echtheiten auf. Außerdem sind sie gegenüber Wasser im flüssigen Aggregatszustand nicht durchlässig. Weiterhin weisen sie eine hohe Wasserdampfdurchlässigkeit auf. Tropfen von verschütteter Flüssigkeit können leicht entfernt werden, beispielsweise mit einem Lappen. Außerdem weisen erfindungsgemäße mehrschichtige Verbundmaterialien ein gefälliges Aussehen und einen sehr angenehmen weichen Griff auf.

Erfindungsgemäße mehrschichtige Verbundmaterialien lassen sich beispielsweise als Verpackungsmaterial verwenden, wenn eine entsprechend ansprechende Verpackung gefragt ist. Außerdem kann man erfindungsgemäße mehrschichtige Verbundmaterialien hinterschäumen oder hinterformen und so hergestellte Bauteile vielseitig verwenden, beispielsweise im Automobilsektor.

Erfindungsgemäße mehrschichtige Verbundmaterialien lassen sich weiterhin zur Herstellung oder als Bestandteil von Bekleidungsstücken verwenden, beispielsweise von Jacken, Hosen, Mänteln, Hüten, Schuhen, insbesondere Schuhschäften und insbesondere Sportbekleidung aller Art.

Ein weiterer Gegenstand der vorliegenden Erfindung ist ein Verfahren zur Herstellung von erfindungsgemäßen mehrschichtigen Verbundmaterialien, im Rahmen der vorliegenden Erfindung auch als erfindungsgemäßes Herstellungsverfahren bezeichnet. In einer Ausführungsform des erfindungsgemäßen Herstellungsverfahrens geht man so vor, mit Hilfe einer Matrize eine Polyurethanschicht (C) bildet, mindestens einen organischen Klebstoff vollflächig oder partiell auf Folie (A) und/oder auf Polyurethanschicht (C) aufbringt und dann Polyurethanschicht (C) mit Folie (A) punktförmig, streifenartig oder flächig verbindet.

In einer Ausführungsform der vorliegenden Erfindung stellt man erfindungsgemäßes mehrschichtiges Verbundmaterial durch ein Beschichtungsverfahren her, indem man zunächst einen Polyurethanfilm (C) bereitstellt, mindestens ein Folie (A) oder den Polyurethanfilm (C) oder beides auf je einer Fläche teilweise, beispielsweise musterförmig, mit organischem Klebstoff bestreicht und dann die beiden Flächen miteinander in Kontakt bringt. Danach kann man noch das so erhältliche System aneinanderpressen oder thermisch behandeln oder unter Erwärmen aneinanderpressen.

Der Polyurethanfilm (C) bildet die spätere Polyurethanschicht (C) des erfindungsgemäßen mehrschichtigen Verbundmaterials. Den Polyurethanfilm (C) kann man wie folgt herstellen.

Man bringt eine wässrige Polyurethan-Dispersion auf eine Matrize auf, die vorgewärmt ist, lässt das Wasser verdunsten und überführt danach den sich so bildenden Polyurethanfilm (C) auf Folie (A).

Das Aufbringen von wässriger Polyurethan-Dispersion auf die Matrize kann nach an sich bekannten Methoden erfolgen, insbesondere durch Aufsprühen, beispielsweise mit einer Sprühpistole.

Die Matrize kann eine Musterung, auch Strukturierung genannt, aufweisen, die man beispielsweise durch Lasergravur erzeugt oder durch Abformen.

In einer Ausführungsform der vorliegenden Erfindung stellt man eine Matrize bereit, die eine elastomere Schicht oder einen Schichtverbund aufweist, umfassend eine elastomere Schicht auf einem Träger, wobei die elastomere Schicht ein Bindemittel sowie gegebenenfalls weitere Zusatz- und Hilfsstoffe umfasst. Die Bereitstellung einer Matrize kann dann die folgenden Schritte umfassen:
1) Aufbringen eines flüssigen Bindemittels, das gegebenenfalls Zusatz- und/oder Hilfsstoffe enthält, auf eine gemusterte Oberfläche, beispielsweise eine andere Matrize oder ein Originalmuster,
2) Aushärten des Bindemittels, beispielsweise durch thermisches Aushärten, Strahlungshärtung oder durch Alternlassen,
3) Trennen der so erhältlichen Matrize und gegebenenfalls Aufbringen auf einen Träger, beispielsweise eine Metallplatte oder einen Metallzylinder.

In einer Ausführungsform der vorliegenden Erfindung geht man so vor, dass man ein flüssiges Silikon auf ein Muster aufgibt, das Silikon altern und somit aushärten lässt und dann abzieht. Die Silikonfolie wird dann auf einem Aluträger geklebt.

In einer bevorzugten Ausführungsform der vorliegenden Erfindung stellt man eine Matrize bereit, die eine lasergravierbare Schicht oder einen Schichtverbund aufweist, umfassend eine lasergravierbare Schicht auf einem Träger, wobei die lasergravierbare Schicht ein Bindemittel sowie gegebenenfalls weitere Zusatz- und Hilfsstoffe umfasst. Die lasergravierbare Schicht ist vorzugsweise außerdem elastomer.

In einer bevorzugten Ausführungsform umfasst die Bereitstellung einer Matrize die folgenden Schritte:
1) Bereitstellen einer lasergravierbaren Schicht oder eines Schichtverbunds, umfassend eine lasergravierbare Schicht auf einem Träger, wobei die lasergravierbare Schicht ein Bindemittel sowie vorzugsweise Zusatz- und Hilfsstoffe umfasst,
2) thermochemische, photochemische oder aktinische Verstärkung der lasergravierbaren Schicht,
3) Eingravieren einer der Oberflächenstruktur der oberflächenstrukturierten Beschichtung entsprechenden Oberflächenstruktur in die lasergravierbare Schicht mit einem Laser.

Die lasergravierbare Schicht, die vorzugsweise elastomer ist, oder der Schichtverbund können auf einem Träger vorliegen, vorzugsweise liegen sie auf einem Träger vor. Beispiele für geeignete Träger umfassen Gewebe und Folien aus Polyethylenterephthalat (PET), Polyethylennaphthalat (PEN), Polybutylenterephthalat (PBT), Polyethylen, Polypropylen, Polyamid oder Polycarbonat, bevorzugt PET- oder PEN-Folien. Ebenfalls als Träger geeignet sind Papiere und Gewirke, beispielsweise aus Cellulose. Als Träger können auch konische oder zylindrische Röhren aus den besagten Materialien, so genannte Sleeves, eingesetzt werden. Für Sleeves eignen sich auch Glasfasergewebe oder Verbundmaterialien aus Glasfasern und polymeren Werkstoffen. Weiterhin geeignete Trägermaterialien sind metallische Träger wie beispielsweise massive oder gewebeförmige, flächige oder zylindrische Träger aus Aluminium, Stahl, magnetisierbarem Federstahl oder anderen Eisenlegierungen.

In einer Ausführungsform der vorliegenden Erfindung kann der Träger zur besseren Haftung der lasergravierbaren Schicht mit einer Haftschicht beschichtet sein. In einer anderen Ausführungsform der vorliegenden Erfindung ist keine Haftschicht erforderlich.

Die lasergravierbare Schicht umfasst mindestens ein Bindemittel, das ein Präpolymer sein kann, welches im Zuge einer thermochemischen Verstärkung zu einem Polymer reagiert. Geeignete Bindemittel kann man je nach den gewünschten Eigenschaften der lasergravierbaren Schicht bzw. der Matrize, beispielsweise im Hinblick auf Härte, Elastizität oder Flexibilität, auswählen. Geeignete Bindemittel lassen sich im Wesentlichen in 3 Gruppen einteilen, ohne dass die Bindemittel hierauf beschränkt sein sollen.

Die erste Gruppe umfasst solche Bindemittel, die über ethylenisch ungesättigte Gruppen verfügen. Die ethylenisch ungesättigten Gruppen sind photochemisch, thermochemisch, mittels Elektronenstrahlen oder mit einer beliebigen Kombination dieser Prozesse vernetzbar. Zusätzlich kann eine mechanische Verstärkung mittels Füllstoffen vorgenommen werden. Derartige Bindemittel sind beispielsweise solche, die 1,3Dien-Monomere wie Isopren oder 1,3-Butadien einpolymerisiert enthalten. Die ethylenisch ungesättigte Gruppe kann dabei einmal als Kettenbaustein des Polymeren fungieren (1,4-Einbau), oder sie kann als Seitengruppe (1,2-Einbau) an die Polymerkette gebunden sein. Als Beispiele seien Naturkautschuk, Polybutadien, Polyisopren, Styrol-Butadien-Kautschuk, Nitril-Butadien-Kautschuk, Acrylnitril-Butadien-Styrol (ABS) Copolymer, Butyl-Kautschuk, Styrol-Isopren-Kautschuk, Polychloropren, Polynorbornen-Kautschuk, Ethylen-Propylen-Dien-Kautschuk (EPDM) oder Polyurethan-Elastomere mit ethylenisch ungesättigten Gruppen genannt.

Weitere Beispiele umfassen thermoplastisch elastomere Blockcopolymere aus Alkenylaromaten und 1,3-Dienen. Bei den Blockcopolymeren kann es sich sowohl um lineare Blockcopolymere oder auch um radiale Blockcopolymere handeln. Üblicherweise handelt es sich um Dreiblockcopolymere vom A-B-A-Typ, es kann sich aber auch um Zweiblockpolymere vom A-B-Typ handeln, oder um solche mit mehreren alternierenden elastomeren und thermoplastischen Blöcken, z.B. A-B-A-B-A. Es können auch Gemische zweier oder mehrerer unterschiedlicher Blockcopolymere eingesetzt werden. Handelsübliche Dreiblockcopolymere enthalten häufig gewisse Anteile an Zweiblockcopolymeren. Dien-Einheiten können 1,2- oder 1,4-verknüpft sein. Es können sowohl Blockcopolymere vom Styrol-Butadien wie vom Styrol-Isopren-Typ eingesetzt werden. Sie sind beispielsweise unter dem Namen Kraton^{®} im Handel erhältlich. Weiterhin einsetzbar sind auch thermoplastisch elastomere Blockcopolymere mit Endblöcken aus Styrol und einem statistischen Styrol-Butadien-Mittelblock, die unter dem Namen Styroflex^{®} erhältlich sind.

Weitere Beispiele von Bindemitteln mit ethylenisch ungesättigten Gruppen umfassen modifizierte Bindemittel, bei denen vernetzbare Gruppen durch Pfropfungsreaktionen in das polymere Molekül eingeführt werden.

Die zweite Gruppe umfasst solche Bindemittel, die über funktionelle Gruppen verfügen. Die funktionellen Gruppen sind thermochemisch, mittels Elektronenstrahlen, photochemisch oder mit einer beliebigen Kombination dieser Prozesse vernetzbar. Zusätzlich kann eine mechanische Verstärkung mittels Füllstoffen vorgenommen werden. Beispiele geeigneter funktioneller Gruppen umfassen -Si(HR¹)O-, -Si(R¹R²)O-, -OH, -NH₂, -NHR¹, -COOH, -COOR¹, -COHN₂, -O-C(O)NHR¹, -SO₃H oder -CO-. Beispiele von Bindemitteln umfassen Silikonelastomere, Acrylat-Kautschuke, Ethylen-Acrylat-Kautschuke, Ethylen-Acrylsäure-Kautschuke oder Ethylen-Vinylacetat-Kautschuke sowie deren teilweise hydrolysierte Derivate, thermoplastisch elastomere Polyurethane, sulfonierte Polyethylene oder thermoplatisch elastomere Polyester. Dabei sind R¹ und - so vorhanden - R² verschieden oder vorzugsweise gleich und gewählt aus organischen Gruppen und insbesondere C₁-C₆-Alkyl.

In einer Ausführungsform der vorliegenden Erfindung kann man Bindemittel einsetzen, die sowohl über ethylenisch ungesättigte Gruppen als auch über funktionelle Gruppen verfügen. Beispiele umfassen additionsvernetzende Silikonelastomere mit funktionellen und ethylenisch ungesättigten Gruppen, Copolymere von Butadien mit (Meth)acrylaten, (Meth)acrylsäure oder Acrylnitril, sowie weiterhin Copolymere bzw. Blockcopolymere von Butadien oder Isopren mit funktionelle Gruppen aufweisenden Styrolderivaten, beispielsweise Blockcopolymere aus Butadien und 4-Hydroxystyrol.

Die dritte Gruppe von Bindemitteln umfasst solche, die weder über ethylenisch ungesättigte Gruppen noch über funktionelle Gruppen verfügen. Zu nennen sind hier beispielsweise Polyolefine oder Ethylen/Propylen-Elastomere oder durch Hydrierung von Dien-Einheiten erhaltene Produkte, wie beispielsweise SEBS-Kautschuke.

Polymerschichten, die Bindemittel ohne ethylenisch ungesättigte oder funktionelle Gruppen enthalten, müssen in der Regel mechanisch, mit Hilfe energiereicher Strahlung oder einer Kombination daraus verstärkt werden, um eine optimal scharfkantige Strukturierbarkeit mittels Laser zu ermöglichen.

Man kann auch Gemische zweier oder mehrerer Bindemittel einsetzen, wobei es sich dabei sowohl um Bindemittel aus jeweils nur einer der geschilderten Gruppen handeln kann oder um Gemische von Bindemitteln aus zwei oder allen drei Gruppen. Die Kombinationsmöglichkeiten sind nur insofern beschränkt, als die Eignung der Polymerschicht für den Laserstrukturierungsprozess und den Abformvorgang nicht negativ beeinflusst werden darf. Vorteilhaft kann beispielsweise ein Gemisch von mindestens einem elastomeren Bindemittel, welches keine funktionellen Gruppen aufweist, mit mindestens einem weiteren Bindemittel, welches funktionelle Gruppen oder ethylenisch ungesättigte Gruppen aufweist, eingesetzt werden.

In einer Ausführungsform der vorliegenden Erfindung beträgt der Anteil des oder der Bindemittel in der elastomeren Schicht bzw. der betreffenden lasergravierbaren Schicht 30 Gew.-% bis 99 Gew.-% bezüglich der Summe aller Bestandteile der betreffenden elastomeren Schicht bzw. der betreffenden lasergravierbaren Schicht, bevorzugt 40 bis 95 Gew.-%, und ganz besonders bevorzugt 50 bis 90 Gew.-%.

In einer Ausführungsform der vorliegenden Erfindung bildet man Polyurethanschicht (C) mit Hilfe einer Silikonmatrize. Unter Silikonmatrizen werden im Rahmen der vorliegenden solche Matrizen verstanden, zu deren Herstellung mindestens ein Bindemittel eingesetzt wird, das mindestens eine, bevorzugt mindestens drei O-Si(R¹R²)-O-Gruppen pro Molekül aufweist, wobei die Variablen wie vorstehend definiert sind.

Optional kann die elastomere Schicht bzw. lasergravierbare Schicht reaktive niedermolekulare oder oligomere Verbindungen umfassen. Oligomere Verbindungen weisen im Allgemeinen ein Molekulargewicht von nicht mehr als 20.000 g/mol auf. Reaktive niedermolekulare und oligomere Verbindungen sollen im Folgenden der Einfachheit halber als Monomere bezeichnet werden.

Monomere können einerseits zugesetzt werden, um die Geschwindigkeit der fotochemischen oder thermochemischen Vernetzung oder der Vernetzung mittels energiereicher Strahlung zu erhöhen, sofern dies gewünscht wird. Bei Verwendung von Bindemitteln aus der ersten und zweiten Gruppe ist der Zusatz von Monomeren zur Beschleunigung im Allgemeinen nicht zwingend notwendig. Bei Bindemitteln aus der dritten Gruppe ist der Zusatz von Monomeren im Regelfalle empfehlenswert, ohne dass dies zwingend in jedem Falle notwendig wäre.

Unabhängig von der Frage der Vernetzungsgeschwindigkeit können Monomere auch zur Steuerung der Vernetzungsdichte eingesetzt werden. Je nach Art und Menge der zugesetzten niedermolekularen Verbindungen werden weitere oder engere Netzwerke erhalten. Als Monomere können einerseits bekannte ethylenisch ungesättigte Monomere eingesetzt werden. Die Monomeren sollen mit den Bindemitteln im Wesentlichen verträglich sein und mindestens eine fotochemisch oder thermochemisch reaktive Gruppe aufweisen. Sie sollten nicht leichtflüchtig sein. Bevorzugt beträgt der Siedepunkt von geeigneten Monomeren mindestens 150°C. Besonders geeignet sind Amide der Acrylsäure oder Methacrylsäure mit mono- oder polyfunktionellen Alkoholen, Aminen, Aminoalkoholen oder Hydroxyethern und -estern, Styrol oder substituierte Styrole, Ester der Fumar- oder Maleinsäure oder Allylverbindungen. Beispiele umfassen n-Butylacrylat, 2-Ethylhexylacrylat, Laurylacrylat, 1,4-Butandioldi(meth)acrylat, 1,6-Hexandioldiacrylat, 1,6-Hexandioldimethacrylat, 1,9-Nonandioldiacrylat, Trimethylolpropantrimethacrylat, Trimethylolpropantriacrylat, Dipropylenglykoldiacrylat, Tripropylenglykoldiacrylat, Dioctylfumarat, N-Dodecylmaleimid und Triallylisocyanurat.

Insbesondere für die thermochemische Verstärkung geeignete Monomere umfassen reaktive niedermolekulare Silikone wie beispielsweise zyklische Siloxane, Si-H-funktionelle Siloxane, Siloxane mit Alkoxy- oder Estergruppen, schwefelhaltige Siloxane und Silane, Dialkohole wie beispielsweise 1,4-Butandiol, 1,6-Hexändiol, 1,8-Octandiol, 1,9-Nonandiol, Diamine wie beispielsweise 1,6-Hexandiamin, 1,8-Octandiamin, Aminoalkohole wie beispielsweise Ethanolamin, Diethanolamin, Butylethanolamin, Dicarbonsäuren wie beispielsweise 1,6-Hexandicarbonsäure, Terephthalsäure, Maleinsäure oder Fumarsäure.

Es können auch Monomere eingesetzt werden, die sowohl ethylenisch ungesättigte Gruppen wie funktionelle Gruppen aufweisen. Als Beispiele seinen w-Hydroxyalkyl(meth)acrylate genannt, wie beispielsweise Ethylenglykolmono(meth)acrylat, 1,4Butandiolmono(meth)acrylat oder 1,6-Hexandiolmono(meth)acrylat.

Selbstverständlich können auch Gemische verschiedener Monomerer eingesetzt werden, vorausgesetzt die Eigenschaften der elastomeren Schicht werden durch die Mischung nicht negativ beeinflusst. Im Regelfalle beträgt die Menge zugesetzter Monomere 0 bis 40 Gew.-% bezüglich der Menge aller Bestandteile der elastomeren Schicht bzw. der betreffenden lasergravierbaren Schicht, bevorzugt 1 bis 20 Gew.-%.

In einer Ausführungsform kann man ein oder mehrere Monomere mit einem oder mehreren Katalysatoren einsetzen. So ist es möglich, Silikonmatrizen durch Zugabe von einer oder mehrerer Säuren oder durch Organozinnverbindungen den Schritt 2) der Bereitstellung der Matrize zu beschleunigen. Geeignete Organozinnverbindungen können sein: Di-n-butylzinndilaureat, Di-n-butylzinndiactanoat, Di-n-butylzinndi-2-ethylhexanoat, Di-n-octylzinndi-2-ethylhexanoat und Di-n-butylbis(1-oxoneodecyloxy)stannan.

Die elastomere Schicht bzw. die lasergravierbare Schicht kann weiterhin Zusatz- und Hilfsstoffe wie beispielsweise IR-Absorber, Farbstoffe, Dispergierhilfsmittel, Antistatika, Weichmacher oder abrasive Partikel umfassen. Die Menge derartiger Zusatz- und Hilfsstoffe sollte im Regelfalle 30 Gew.-% bezüglich der Menge aller Komponenten der elastomeren Schicht bzw. der betreffenden lasergravierbaren Schicht nicht überschreiten.

Die elastomere Schicht bzw. die lasergravierbare Schicht kann aus mehreren Einzelschichten aufgebaut werden. Diese Einzelschichten können von gleicher, in etwa gleicher oder von unterschiedlicher stofflicher Zusammensetzung sein. Die Dicke der lasergravierbaren Schicht bzw. aller Einzelschichten zusammen beträgt im Regelfalle zwischen 0,1 und 10 mm, bevorzugt 0,5 bis 3 mm. Die Dicke kann man abhängig von anwendungstechnischen und maschinentechnischen Prozessparametern des Lasergravurvorgangs und des Abformvorgangs geeignet auswählen.

Die elastomere Schicht bzw. die lasergravierbare Schicht kann optional weiterhin eine Oberschicht mit einer Dicke von nicht mehr als 300 µm aufweisen. Die Zusammensetzung einer solchen Oberschicht kann man im Hinblick auf optimale Gravierbarkeit und mechanische Stabilität auswählen, während die Zusammensetzung der darunter liegenden Schicht im Hinblick auf optimale Härte oder Elastizität ausgewählt wird.

In einer Ausführungsform der vorliegenden Erfindung ist die Oberschicht selbst lasergravierbar oder im Zuge der Lasergravur zusammen mit der darunter liegenden Schicht entfernbar. Die Oberschicht umfasst mindestens ein Bindemittel. Sie kann weiterhin einen Absorber für Laserstrahlung oder auch Monomere oder Hilfsmittel umfassen.

In einer Ausführungsform der vorliegenden Erfindung handelt es sich bei der Silikonmatrize um eine mit Hilfe von Lasergravur strukturierte Silikonmatrize.

Von ganz besonderem Vorteil werden für das erfindungsgemäße Verfahren thermoplastisch elastomere Bindemittel oder Silikonelastomere eingesetzt. Bei Verwendung thermoplastisch elastomerer Bindemittel erfolgt die Herstellung bevorzugt durch Extrudieren zwischen eine Trägerfolie und eine Deckfolie oder ein Deckelement gefolgt von Kalandrieren, wie beispielsweise für Flexodruckelemente in EP-A 0 084 851 offenbart. Auf diese Art und Weise lassen sich auch dickere Schichten in einem einzigen Arbeitsgang herstellen. Mehrschichtige Elemente können mittels Coextrusion hergestellt werden.

Wünscht man die Matrize mit Hilfe von Lasergravur zu strukturieren, so ist es bevorzugt, die lasergravierbare Schicht vor der Lasergravur durch Erwärmen (thermochemisch), durch Bestrahlen mit UV-Licht (photochemisch) oder durch Bestrahlen mit energiereicher Strahlung (aktinisch) oder einer beliebigen Kombination davon zu verstärken.

Anschließend wird die lasergravierbare Schicht oder der Schichtverbund auf einen zylindrischen (temporären) Träger, beispielsweise aus Kunststoff, glasfaserverstärktem Kunststoff, Metall oder Schaum, beispielsweise mittels Klebeband, Unterdruck, Klemmvorrichtungen oder Magnetkraft, aufgebracht und wie oben beschrieben graviert. Alternativ kann auch die plane Schicht bzw. der Schichtverbund wie oben beschrieben graviert werden. Optional wird während des Lasergravurvorgangs die lasergravierbare Schicht mit einem Rundwascher oder einem Durchlaufwascher mit einem Reinigungsmittel zur Entfernung von Gravurrückständen gewaschen.

Auf die beschriebene Weise kann die Matrize als Negativmatrize oder als Positivmatrize hergestellt werden.

In einer ersten Variante weist die Matrize eine Negativ-Struktur auf, so dass die mit Folie (A) verbindbare Beschichtung direkt durch Auftragen eines flüssigen Kunststoffmaterials auf die Oberfläche der Matrize und anschließender Verfestigung des Polyurethans erhalten werden kann.

In einer zweiten Variante weist die Matrize eine Positiv-Struktur auf, so dass zunächst eine Negativ-Matrize durch Abformung von der laserstrukturierten Pösitivmatrize hergestellt wird. Von dieser Negativ-Matrize kann die mit einem flächigen Träger verbindbare Beschichtung anschließend durch Auftragen eines flüssigen Kunststoffmaterials auf die Oberfläche der Negativmatrize und anschließender Verfestigung des Kunststoffmaterials erhalten werden.

Vorzugsweise werden in die Matrize Strukturelemente mit Abmessungen im Bereich von 10 bis 500 µm eingraviert. Die Strukturelemente können als Erhebungen oder Vertiefungen ausgebildet sein. Vorzugsweise haben die Strukturelemente eine einfache geometrische Form und sind beispielsweise Kreise, Ellipsen, Quadraten, Rauten, Dreiecken und Sterne. Die Strukturelemente können ein regelmäßiges oder unregelmäßiges Raster bilden. Beispiele sind ein klassisches Punktraster oder ein stochastisches Raster, beispielsweise ein frequenzmoduliertes Raster.

In einer Ausführungsform der vorliegenden Erfindung arbeitet man zur Strukturierung der Matrize mit Hilfe eines Lasers Näpfchen in die Matrize ein, die eine mittlere Tiefe im Bereich von 50 bis 250 µm aufweisen und einen Mittenabstand im Bereich von 50 bis 250 µm.

Beispielsweise kann man die Matrize so gravieren, dass sie "Näpfchen" (Vertiefungen) aufweist, welche einen Durchmesser im Bereich von 10 bis 500 µm an der Oberfläche der Matrize aufweisen. Vorzugsweise beträgt der Durchmesser an der Oberfläche der Matrize 20 bis 250 µm und besonders bevorzugt 30 bis 150 µm. Der Abstand der Näpfchen kann beispielsweise 10 bis 500 µm, vorzugsweise 20 bis 200 µm, besonders bevorzugt bis 80 µm betragen.

In einer Ausführungsform der vorliegenden Erfindung weist die Matrize vorzugsweise neben einer Oberflächen-Grobstruktur noch eine Oberflächen-Feinstruktur auf. Sowohl Grob- als auch Feinstruktur können durch Lasergravur erzeugt werden. Die Feinstruktur kann beispielsweise eine Mikrorauhigkeit mit einer Rauhigkeitsamplitude im Bereich von 1 bis 30 µm und einer Rauhigkeitsfrequenz von 0,5 bis 30 µm sein. Bevorzugt liegen die Dimensionen der Mikrorauhigkeit im Bereich von 1 bis 20 µm, besonders bevorzugt 2 bis 15 µm und besonders bevorzugt 3 bis 10 µm.

Zur Lasergravur eigenen sich insbesondere IR-Laser. Es können aber auch Laser mit kürzeren Wellenlängen eingesetzt werden, vorausgesetzt der Laser weist eine ausreichende Intensität auf. Beispielsweise kann ein frequenzverdoppelter (532 nm) oder frequenzverdreifächter (355 nm) Nd-YAG-Laser eingesetzt werden, oder auch ein Excimer-Laser (z.B. 248 nm). Zur Lasergravur kann beispielsweise ein CO₂-Laser mit einer Wellenlänge von 10640 nm eingesetzt werden. Besonders bevorzugt werden Laser mit einer Wellenlänge von 600 bis 2000 nm eingesetzt. Beispielsweise können Nd-YAG-Laser (1064 nm), IR-Diodenlaser oder Festkörperlaser eingesetzt werden. Besonders bevorzugt sind Nd/YAG-Laser. Die einzugravierende Bildinformation wird direkt aus dem Lay-Out-Computersystem zur Laserapparatur übertragen. Die Laser können entweder kontinuierlich oder gepulst betrieben werden.

Im Regelfall kann die erhaltene Matrize nach der Herstellung direkt eingesetzt werden. Falls gewünscht, kann die erhaltene Matrize noch nachgereinigt werden. Durch einen solchen Reinigungsschritt werden losgelöste, aber eventuell noch nicht vollständig von der Oberfläche entfernte Schichtbestandteiie entfernt. Im Regelfalle ist einfaches Behandeln mit Wasser, Wasser/Tensid, Alkoholen oder inerten organischen Reinigungsmitteln ausreichend, die vorzugsweise quellungsarm sind.

In einem weiteren Schritt bringt man eine wässrige Formulierung von Polyurethan auf die Matrize auf. Das Aufbringen kann vorzugsweise durch Aufsprühen erfolgen. Die Matrize sollte erwärmt sein, wenn man die Formulierung von Polyurethan aufbringt, beispielsweise auf Temperaturen von mindestens 80°C, bevorzugt mindestens 90°C. Das Wasser aus der wässrigen Formulierung von Polyurethan verdampft und bildet die Kapillaren in der sich verfestigenden Polyurethanschicht.

Unter wässrig wird im Zusammenhang mit der Polyurethandispersion verstanden, dass sie Wasser enthält, aber weniger als 5 Gew.-%, bezogen auf die Dispersion, bevorzugt weniger als 1 Gew.-% organisches Lösungsmittel. Besonders bevorzugt lässt sich kein flüchtiges organisches Lösungsmittel nachweisen. Unter flüchtigen organischen Lösungsmitteln werden im Rahmen der vorliegenden Erfindung solche organischen Lösungsmittel verstanden, die bei Normaldruck einen Siedepunkt von bis zu 200°C aufweisen.

Die wässrige Polyurethandispersion kann einen Feststoffgehalt im Bereich von 5 bis 60 Gew.-% auf, bevorzugt 10 bis 50 Gew.-% und besonders bevorzugt 25 bis 45 Gew.-% aufweisen.

Polyurethane (PU) sind allgemein bekannt, kommerziell erhältlich und bestehen im allgemeinen aus einer Weichphase aus höhermolekularen Polyhydroxylverbindungen, z.B. aus Polycarbonat, Polyester- oder Polyethersegmenten, und einer Urethan-Hartphase, gebildet aus niedermolekularen Kettenverlängerungsmitteln und Di- oder Polyisocyanaten.

Verfahren zur Herstellung von Polyurethanen (PU) sind allgemein bekannt. Im allgemeinen werden Polyurethane (PU) durch Umsetzung von
(a) Isocyanaten, bevorzugt Diisocyanaten mit
(b) gegenüber Isocyanaten reaktiven Verbindungen, üblicherweise mit einem Molekulargewicht (M_{w}) von 500 bis 10.000 g/mol, bevorzugt 500 bis 5.000 g/mol, besonders bevorzugt 800 bis 3.000 g/mol, und
(c) Kettenverlängerungsmitteln mit einem Molekulargewicht von 50 bis 499 g/mol gegebenenfalls in Gegenwart von
(d) Katalysatoren
(e) und/oder üblichen Zusatzstoffen
hergestellt.

Im Folgenden sollen beispielhaft die Ausgangskomponenten und Verfahren zur Herstellung der bevorzugten Polyurethane (PU) dargelegt werden. Die bei der Herstellung der Polyurethane (PU) üblicherweise verwendeten Komponenten (a), (b), (c) sowie gegebenenfalls (d) und/oder (e) sollen im Folgenden beispielhaft beschrieben werden:
Als Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylendiisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophorondiisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Bevorzugt sind zudem aliphatische Diisocyanate, insbesondere Hexamethylendiisocyanat (HDI), und besonders bevorzugt sind aromatische Diisocyanate wie 2,2'-, 2,4'- und/oder 4,4'-Diphenylmethandiisocyanat (MDI) und Mischungen der vorstehend genannten Isomere.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten (M_{w}) im Bereich von 500 und 8.000 g/mol, bevorzugt 600 bis 6.000 g/mol, insbesondere 800 bis 3.000 g/mol, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, 1,2-Propylenoxid und/oder 1,2-Butylenoxid, bevorzugt Polyetherole basierend auf Polyoxytetramethylen (Poly-THF), 1,2-Propylenoxid und Ethylenoxid. Polyetherole weisen den Vorteil auf, dass sie eine höhere Hydrolysestabilität als Polyesterole besitzen, und sind bevorzugt als Komponente (b), insbesondere zur Herstellung von weichen Polyurethanen Polyurethan (PU1).

Als Polycarbonatdiole sind insbesondere aliphatische Polycarbonatdiole zu nennen, beispielsweise 1,4-Butandiol-Polycarbonat und 1,6-Hexandiol-Polycarbonat.

Als Polyesterdiole sind solche zu nennen, die sich durch Polykondensation von mindestens einem primären Diol, vorzugsweise mindestens einen primären aliphatischen Diol, beispielsweise Ethylenglykol, 1,4-Butandiol, 1,6-Hexandiol, Neopentylglykol oder besonders bevorzugt 1,4-Dihydroxymethylcyclohexan (als Isomerengemisch) oder Mischungen von mindestens zwei der vorstehend genannten Diole einerseits und mindestens einer, bevorzugt mindestens zwei Dicarbonsäuren oder ihren Anhydriden andererseits herstellen lassen. Bevorzugte Dicarbonsäuren sind aliphatische Dicarbonsäuren wie Adipinsäure, Glutarsäure, Bernsteinsäure und aromatische Dicarbonsäuren wie beispielsweise Phthalsäure und insbesondere Isophthalsäure.

Polyetherole werden bevorzugt durch Anlagerung von Alkylenoxiden, insbesondere Ethylenoxid, Propylenoxid und Mischungen daraus, an Diole wie beispielsweise Ethylenglykol, 1,2-Propylenglykol, 1,2-Butylenglykol, 1,4-Butandiol, 1,3-Propandiol, oder an Triole wie beispielsweise Glycerin, in Gegenwart von hochaktiven Katalysatoren hergestellt. Derartige hochaktive Katalysatoren sind beispielsweise Cäsiumhydroxid und Dimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetherol belassen werden, vorzugsweise wird er entfernt, beispielsweise durch Sedimentation oder Filtration.

Statt eines Polyols können auch Mischungen verschiedener Polyole eingesetzt werden.

Zur Verbesserung der Dispergierbarkeit kann man als gegenüber Isocyanaten reaktive Verbindungen (b) anteilig auch ein oder mehr Diole oder Diamine mit einer Carbonsäuregruppe oder Sulfonsäuregruppe (b') einsetzen, insbesondere Alkalimetall- oder Ammoniumsalze von 1,1-Dimethylolbutansäure, 1,1-Dimethylolpropionsäure oder

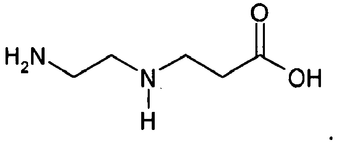

Als Kettenverlängerungsmittel (c) werden an sich bekannte aliphatische, araliphatische, aromatische und/oder cycloaliphatische Verbindungen mit einem Molekulargewicht von 50 bis 499 g/mol und mindestens zwei funktionellen Gruppen, bevorzugt Verbindungen mit genau zwei funktionellen Gruppen pro Molekül, eingesetzt, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen pro Molekül, bevorzugt entsprechende Oligo- und/oder Polypropylenglykole, wobei auch Mischungen an Kettenverlängerungsmitteln (c) eingesetzt werden können.

Besonders bevorzugt handelt es sich bei den Komponenten (a) bis (c) um difunktionelle Verbindungen, d.h. Diisocyanate (a), difunktionelle Polyole, bevorzugt Polyetherole (b) und difunktionelle Kettenverlängerungsmittel, bevorzugt Diole.

Geeignete Katalysatoren (d), welche insbesondere die Reaktion zwischen den NCO-Gruppen der Diisocyanate (a) und den Hydroxylgruppen der Aufbaukomponenten (b) und (c) beschleunigen, sind an sich bekannte tertiäre Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan ("DABCO") und ähnliche tertiäre Amine, sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Komponente (b) eingesetzt.

Neben Katalysator (d) können den Komponenten (a) bis (c) auch Hilfsmittel und/oder Zusatzstoffe (e) hinzugefügt werden. Genannt seien beispielsweise Treibmittel, Antiblockmittel, oberflächenaktive Substanzen, Füllstoffe, beispielsweise Füllstoffe auf Basis von Nanopartikeln, insbesondere Füllstoffe auf Basis von CaCO₃, weiterhin Keimbildungsmittel, Gleithilfemittel, Farbstoffe und Pigmente, Antioxidantien, z.B. gegen Hydrolyse, Licht, Hitze oder Verfärbung, anorganische und/oder organische Füllstoffe, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Bevorzugt enthält das weiche Polyurethan Triazol und/oder Triazolderivat und Antioxidantien in einer Menge von 0,1 bis 5 Gew.-% bezogen auf das Gesamtgewicht des betreffenden weichen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im Antioxidantiengemisch eignen sich bevorzugt phenolische Antioxidantien. In einer bevorzugten Ausführungsform weisen die Antioxidantien, insbesondere die phenolischen Antioxidantien, eine Molmasse (M_{w}) von größer 350 g/mol, besonders bevorzugt von größer 700g/mol und einer maximalen Molmasse (M_{w}) bis 10.000 g/mol, bevorzugt bis 3.000 g/mol auf. Ferner besitzen sie bevorzugt einen Schmelzpunkt von maximal 180°C. Weiterhin werden bevorzugt Antioxidantien verwendet, die amorph oder flüssig sind. Ebenfalls können als Komponente (e) auch Gemische von zwei oder mehr Antioxidantien verwendet werden.

Neben den genannten Komponenten (a), (b) und (c) und gegebenenfalls (d) und (e) können auch Kettenregler (Kettenabbruchsmittel), üblicherweise mit einem Molekulargewicht von 31 bis 3000 g/mol, eingesetzt werden. Solche Kettenregler sind Verbindungen, die lediglich eine gegenüber Isocyanaten reaktive funktionelle Gruppe aufweisen, wie z.B. monofunktionelle Alkohole, monofunktionelle Amine und/oder monofunktionelle Polyole. Durch solche Kettenregler kann ein Fließverhalten, insbesondere bei weichen Polyurethanen, gezielt eingestellt werden. Kettenregler können im allgemeinen in einer Menge von 0 bis 5, bevorzugt 0,1 bis 1 Gew.-Teile, bezogen auf 100 Gew.-Teile der Komponente (b) eingesetzt werden und fallen definitionsgemäß unter die Komponente (c).

Neben den genannten Komponenten (a), (b) und (c) und gegebenenfalls (d) und (e) können auch Vernetzungsmittel mit zwei oder mehr gegenüber Isocyanat reaktiven Gruppen gegen Schluss der Aufbaureaktion eingesetzt werden, beispielsweise Hydrazinhydrat.

Zur Einstellung der Härte von Polyurethan (PU) können die Komponenten (b) und (c) in relativ breiten molaren Verhältnissen gewählt werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der weichen Polyurethane mit zunehmendem Gehalt an (c) ansteigt. Die Umsetzung zur Herstellung von Polyurethan (PU) kann bei einer Kennzahl von 0,8 bis 1,4 : 1, bevorzugt bei einer Kennzahl von 0,9 bis 1,2 : 1, besonders bevorzugt bei einer Kennzahl von 1,05 bis 1,2 : 1 erfolgen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und gegebenenfalls (c) und gegebenenfalls monofunktionellen gegenüber Isocyanaten reaktiven Komponenten als Kettenabbruchsmitteln wie z.B. Monoalkoholen.

Die Herstellung von Polyurethan (PU) kann nach an sich bekannten Verfahren kontinuierlich, beispielsweise nach One-shot oder dem Prepolymerverfahren, oder diskontinuierlich nach dem an sich bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Polyurethan (PU) kann man nach an sich bekannten Verfahren in Wasser dispergieren, beispielsweise indem man Polyurethan (PU) in Aceton löst oder als Lösung in Aceton herstellt, mit Wasser versetzt und danach das Aceton entfernt, beispielsweise durch Abdestillieren. In einer Variante stellt man Polyurethan (PU) als Lösung in N-Methylpyrrolidon oder N-Ethylpyrrolidon her, versetzt mit Wasser und entfernt das N-Methylpyrrolidon bzw. N-Ethylpyrrolidon.

In einer Ausführungsform der vorliegenden Erfindung enthalten erfindungsgemäße wässrige Dispersionen zwei verschiedene Polyurethane Polyurethan (PU1) und Polyurethan (PU2) auf, von denen Polyurethan (PU1) ein so genanntes weiches Polyurethan ist, das wie oben als Polyurethan (PU) beschrieben aufgebaut ist, und mindestens ein hartes Polyurethan (PU2).

Hartes Polyurethan (PU2) kann man im Grundsatz analog zu weichem Polyurethan (PU1) herstellen, jedoch wählt man andere gegenüber Isocyanaten reaktiven Verbindungen (b) oder andere Mischungen von gegenüber Isocyanaten reaktiven Verbindungen (b), im Rahmen der vorliegenden Erfindung auch als gegenüber Isocyanaten reaktiven Verbindungen (b2) oder kurz Verbindung (b2) bezeichnet.

Beispiele für Verbindungen (b2) sind insbesondere 1,4-Butandiol, 1,6-Hexandiol und Neopentylglykol, entweder in Mischung miteinander oder in Mischung mit Polyethylenglykol.

In einer Variante der vorliegenden Erfindung wählt man als Diisocyanat (a) und Polyurethan (PU2) jeweils Mischungen von Diisocyanaten, beispielsweise Mischungen von HDI und IPDI, wobei man zur Herstellung von hartem Polyurethan (PU2) größere Anteile an IPDI wählt als zur Herstellung von weichem Polyurethan (PU1).

In einer Ausführungsform der vorliegenden Erfindung weist Polyurethan (PU2) einen Shore-Härte A im Bereich von über 60 bis maximal 100 auf, wobei die Shore-Härte A nach DIN 53505 nach 3 Sekunden bestimmt wurde.

In einer Ausführungsform der vorliegenden Erfindung weist Polyurethan (PU) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist weiches Polyurethan (PU1) einen mittleren Partikeldurchmesser im Bereich von 100 bis 300 nm, bevorzugt 120 bis 150 nm auf, bestimmt durch Laserlichtstreuung.

In einer Ausführungsform der vorliegenden Erfindung weist Polyurethan (PU2) einen mittleren Partikeldurchmesser im Bereich im Bereich von 100 bis 300 nm, bevorzugt 120 bis 150 nm auf, bestimmt durch Laserlichtstreuung.

Die wässrige Polyurethandispersion kann weiterhin mindestens einen Härter, der auch als Vernetzer bezeichnet werden kann, aufweisen. Als Härter sind Verbindungen geeignet, die mehrere Polyurethanmoleküle miteinander vernetzen können, beispielsweise bei thermischer Aktivierung. Besonders geeignet sind Vernetzer auf Basis von trimeren Diisocyanaten, insbesondere auf Basis von aliphatischen Diisocyanaten wie Hexamethylendiisocyanat. Ganz besonders bevorzugt sind Vernetzer der Formel I a oder I b, im Rahmen der vorliegenden Erfindung auch kurz Verbindung (V) genannt, 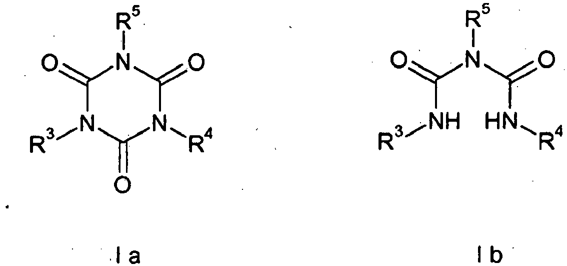 wobei R³, R⁴ und R⁵ verschieden oder vorzugsweise gleich sein können und gewählt werden aus A¹-NCO und A¹-NH-CO-X, wobei
A¹ ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-.
X gewählt wird O(AO)ₓR⁶, wobei
AO ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH₃)O),
x ist eine ganze Zahl im Bereich von 1 bis 50, bevorzugt 5 bis 25, und
R⁶ ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Verbindungen (V) sind solche, bei denen R³, R⁴ und R⁵ jeweils gleich (CH₂)₄-NCO, (CH₂)₆-NCO oder (CH₂)₁₂-NCO sind.

Wässrige Polyurethandispersionen können weitere Bestandteile enthalten, beispielsweise
(f) eine Silikonverbindung mit reaktiven Gruppen,
im Rahmen der vorliegenden Erfindung auch Silikonverbindung (f) genannt.

Beispiele für reaktive Gruppen im Zusammenhang mit Silikonverbindungen (f) sind beispielsweise Carbonsäuregruppen, Carbonsäurederivate wie beispielsweise Carbönsäuremethylester oder Carbonsäureanhydride, insbesondere Bernsteinsäureanhydridgruppen, und besonders bevorzugt Carbonsäuregruppen.

Beispiele für reaktive Gruppen sind weiterhin primäre und sekundäre Aminogruppen, beispielsweise NH(iso-C₃H₇)-Gruppen, NH(n-C₃H₇)-Gruppen, NH(cyclo-C₆H₁₁)-Gruppen und NH(n-C₄H₉)-Gruppen, insbesondere NH(C₂H₅)-Gruppen und NH(CH₃)-Gruppen, und ganz besonders bevorzugt NH₂-Gruppen.

Weiterhin sind Aminoalkylaminogruppen bevorzugt wie beispielsweise -NH-CH₂-CH₂-NH₂-Gruppen, -NH-CH₂-CH₂-CH₂-NH₂-Gruppen, -NH-CH₂-CH₂-NH(C₂H₅)-Gruppen, -NH-CH₂-CH₂-CH₂-NH(C₂H₅)-Gruppen, -NH-CH₂-CH-₂-NH(CH₃)-Gruppen, -NH-CH₂-CH₂-CH₂-NH(CH₃)-Gruppen.

Die reaktive Gruppe bzw. die reaktiven Gruppen sind an Silikonverbindung (f) entweder direkt oder vorzugsweise über einen Spacer A² gebunden. A² wird gewählt aus Arylen, unsubstituiert oder substituiert mit einer bis vier C₁-C₄-Alkylgruppen, Alkylen und Cycloalkylen wie beispielsweise 1,4-Cyclohexylen. Bevorzugte Spacer A² sind Phenylen, insbesondere para-Phenylen, weiterhin Toluylen, insbesondere para-Toluylen, und C₂-C₁₈-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-, -(CH₂)₁₄-, -(CH₂)₁₆- und -(CH₂)₁₈-.

Zusätzlich zu den reaktiven Gruppen enthält Silikonverbindung (f) nicht-reaktive Gruppen, insbesondere Di-C₁-C₁₀-alkyl-SiO₂-Gruppen oder Phenyl-C₁-C₁₀-Alkyl-SiO₂-Gruppen, insbesondere Dimethyl-SiO₂-Gruppen, und gegebenenfalls eine oder mehrere Si(CH₃)₂-OH-Gruppen oder Si(CH₃)₃-Gruppen.

In einer Ausführungsform der vorliegenden Erfindung weist Silikonverbindung (f) im Mittel ein bis vier reaktive Gruppen pro Molekül auf.

In einer speziellen Ausführungsform der vorliegenden Erfindung weist Silikonverbindung (f) im Mittel ein bis vier COOH-Gruppen pro Molekül auf.

In einer anderen speziellen Ausführungsform der vorliegenden Erfindung weist Silikonverbindung (f) im Mittel ein bis vier Aminogruppen oder Aminoalkylaminogruppen pro Molekül auf.

Silikonverbindung (f) weist kettenförmig oder verzweigt angeordnete Si-O-Si-Einheiten auf.

In einer Ausführungsform der vorliegenden Erfindung weist Silikonverbindung (f) ein Molekulargewicht Mₙ im Bereich von 500 bis 10.000 g/mol auf, bevorzugt bis 5.000 g/mol.

Wenn Silikonverbindung (f) mehrere reaktive Gruppen pro Molekül aufweist, so können diese reaktiven Gruppen - direkt oder über Spacer A² - über mehrere Si-Atome oder paarweise über dasselbe Si-Atom an der Si-O-Si-Kette gebunden sein.

Die reaktiven Gruppen bzw. die reaktive Gruppe kann an einem oder mehreren der terminalen Si-Atome von Silikonverbindung (f) - direkt oder über Spacer A² - gebunden sein. In einer anderen Ausführungsform der vorliegenden Erfindung ist die reaktive Gruppe bzw. sind die reaktiven Gruppen an einem oder mehreren der nicht terminalen Si-Atome von Silikonverbindung (f) - direkt oder über Spacer A² - gebunden.

In einer Ausführungsform der vorliegenden Erfindung enthält wässrige Polyurethandispersion weiterhin
ein Polydi-C₁-C₄-Alkylsiloxan (g), das weder Aminogruppen noch COOH-Gruppen aufweist, vorzugsweise ein Polydimethylsiloxan, im Rahmen der vorliegenden Erfindung auch kurz Polydialkylsiloxan (g) bzw. Polydimethylsiloxan (g) genannt.

Dabei kann C₁-C₄-Alkyl in Polydialkylsiloxan (g) verschieden oder vorzugsweise gleich sein und gewählt aus Methyl, Ethyl, n-Propyl, iso-Propyl, n-Butyl, iso-Butyl, sec.-Butyl und tert.-Butyl, wobei unverzweigtes C₁-C₄-Alkyl bevorzugt ist, besonders bevorzugt ist Methyl.

Bei Polydialkylsiloxan (g) und vorzugsweise bei Polydimethylsiloxan (g) handelt es sich vorzugsweise um unverzweigte Polysiloxane mit Si-O-Si-Ketten oder um solche Polysiloxane, die bis zu 3, bevorzugt maximal eine Verzweigung pro Molekül aufweisen.

Polydialkylsiloxan (g) und insbesondere Polydimethylsiloxan (g) kann eine oder mehrere Si(C₁-C₄-Alkyl)₂-OH-Gruppen aufweisen.

In einer Ausführungsform der vorliegenden Erfindung enthält wässrige Polyurethandispersion
insgesamt im Bereich von 20 bis 30 Gew.-% Polyurethan (PU), bzw. insgesamt im Bereich von 20 bis 30 Gew.-% Polyurethane (PU1) und (PU2),
im Bereich von 1 bis 10, bevorzugt 2 bis 5 Gew.-% Härter,
im Bereich von 1 bis 10 Gew.-% Silikonverbindung (f),
im Bereich von null bis 10, bevorzugt 0,5 bis 5 Gew.-% Polydialkylsiloxan (g).

In einer Ausführungsform der vorliegenden Erfindung enthält wässrige Polyurethandispersion
im Bereich von 10 bis 30 Gew.-% weiches Polyurethan (PU1) und
im Bereich von null bis 20 Gew.-% hartes Polyurethan (PU2).

In einer Ausführungsform der vorliegenden Erfindung weist erfindungsgemäße wässrige Dispersion einen Feststoffgehalt von insgesamt 5 bis 60 Gew.-% auf, bevorzugt 10 bis 50 Gew.-% und besonders bevorzugt 25 bis 45 Gew.-%.

Dabei bezeichnen Angaben in Gew.-% jeweils den Wirkstoff bzw. Feststoff und sind auf die gesamte erfindungsgemäße wässrige Dispersion bezogen. Der zu 100 Gew.-% fehlende Rest ist vorzugsweise kontinuierliche Phase, beispielsweise Wasser oder ein Gemisch von einem oder mehreren organischen Lösemitteln und Wasser.

In einer Ausführungsform der vorliegenden Erfindung enthält wässrige Polyurethandispersion mindestens einen Zusatz (h), gewählt aus Pigmenten, Mattierungsmitteln, Lichtschutzmitteln, Antistatika, Antisoil, Antiknarz, Verdickungsmitteln, insbesondere Verdickungsmitteln auf Basis von Polyurethanen, und Mikrohohlkugeln.

In einer Ausführungsform der vorliegenden Erfindung enthält wässrige Polyurethandispersion insgesamt bis zu 20 Gew.-% an Zusätzen (h).

Wässrige Polyurethandispersion kann außerdem ein oder mehrere organische Lösemittel enthalten. Geeignete organische Lösemittel sind beispielsweise Alkohole wie Ethanol oder Isopropanol und insbesondere Glykole, Diglykole, Triglykole oder Tetraglykole und zweifach oder vorzugsweise einfach mit C₁-C₄-Alkyl veretherte Glykole, Diglykole, Triglykole oder Tetraglykole. Beispiele für geeignete organische Lösemittel sind Ethylenglykol, Propylenglykol, Butylenglykol, Diethylenglykol, Triethylenglykol, Tetraethylenglykol, Dipropylenglykol, 1,2-Dimethoxyethan, Methyltriethylenglykol ("Methyltriglykol") und Triethylenglykol-n-butylether ("Butyltriglykol").

Zur Herstellung von wässrigen Polyurethandispersionen kann man Polyurethan (PU), Härter und Silikonverbindung (f) mit Wasser und gegebenenfalls einem oder mehreren der vorstehend genannten organischen Lösemittel vermischen. Weiterhin vermischt man, falls gewünscht, mit Polydialkylsiloxan (g) und Zusätzen (h). Das Vermischen kann man beispielsweise durch Verrühren durchführen. Dabei ist die Reihenfolge der Zugabe von Polyurethan (PU), Härter, Silikonverbindung (f) und Wasser und gegebenenfalls einem oder mehreren der vorstehend genannten organischen Lösemittel sowie - falls gewünscht - Polydialkylsiloxan (g) und Zusätzen (h) beliebig.

Bevorzugt geht man von einem in Wasser oder einem Gemisch aus Wasser und organischem Lösemittel dispergierten Polyurethan (PU) oder von dispergiertem weichem Polyurethan (PU1) und hartem Polyurethan (PU2) aus und gibt, vorzugsweise unter Rühren, Härter und Silikonverbindung (f) sowie, falls gewünscht, Polydialkylsiloxan (g) und gegebenenfalls ein oder mehrere organische Lösemittel zu. Vorzugsweise unterlässt man jedoch die Zugabe von organischem Lösemittel.

In einer speziellen Ausführungsform gibt man Verdickungsmittel als Beispiel für einen Zusatz (h) als letztes zu und stellt so die gewünschte Viskosität der wässrigen Polyurethandispersion ein.

Nach dem Aushärten der Polyurethanschicht (C) trennt man sie von der Matrize, beispielsweise durch Abziehen, und erhält einen Polyurethanfilm (C), der in erfindungsgemäßem mehrschichtigem Verbundmaterial die Polyurethanschicht (C) bildet.

In einem weiteren Arbeitsgang des erfindungsgemäßen Herstellverfahrens bringt man vorzugsweise organischen Klebstoff auf Polyurethanfilm (C) oder Folie (A) auf, und zwar nicht vollflächig, beispielsweise in Form von Punkten oder Streifen. In einer Variante der vorliegenden Erfindung bringt man einen vorzugsweise organischen Klebstoff auf Polyurethanfilm (C) und einen vorzugsweise organischen Klebstoff auf Folie (A) auf, wobei sich die beiden Klebstoffe unterscheiden, beispielsweise durch einen oder mehrere Zusätze oder dadurch, dass es sich um chemisch verschiedene vorzugsweise organische Klebstoffe handelt. Anschließend verbindet man Polyurethanfilm (C) und Folie (A), und zwar so, dass die Schicht(en) von Klebstoff zwischen Polyurethanfilm (C) und Folie (A) zu liegen kommen. Man härtet den Klebstoff bzw. die Klebstoffe aus, beispielsweise thermisch, durch aktinische Strahlung oder durch Alterung, und erhält erfindungsgemäßes mehrschichtiges Verbundmaterial.

In einer Ausführungsform der vorliegenden Erfindung platziert man eine Zwischenschicht (D) zwischen Folie (A) und Verbindungsschicht (B), zwischen Verbindungsschicht (B) und Polyurethanschicht (C) oder zwischen zwei Verbindungsschichten (C).

Die Zwischenschicht (D) ist wie vorstehend definiert.

Das Platzieren kann manuell oder maschinell erfolgen, kontinuierlich oder diskontinuierlich.

In einer Ausführungsform der vorliegenden Erfindung bereitet man Folie (A) vor, bevor man sie mit Verbindungsschicht (B) versieht. So kann man Folie (A) aufrauen, beispielsweise mit Ionenstrahlen oder chemisch, beispielsweise mit dispergiertem Natrium. Diese Methode ist insbesondere dann bevorzugt, wenn es sich bei Folie (A) um ein fluoriertes Polymer handelt.

Ein weiterer Gegenstand der vorliegenden Erfindung ist die Verwendung von erfindungsgemäßen mehrschichtigen Verbundmaterialien als oder zur Herstellung von Verpackungsmaterialien, beispielsweise Kartons, Kisten, Schachteln, Einbänden oder Umhüllungen. Dabei können die Verpackungsmaterialien auch teilweise oder überwiegend dekorativen Zwecken dienen. Ein weiterer Gegenstand der vorliegenden Erfindung sind Verpackungsmaterialien, bestehend aus, umfassend oder hergestellt unter Verwendung von erfindungsgemäßen mehrschichtigen Verbundmaterialien.

Ein weiterer Gegenstand der vorliegenden Erfindung ist die Verwendung von erfindungsgemäßen Verbundmaterialien zur Herstellung von Bekleidungsstücken, beispielsweise Jacken, Hosen, Mänteln, Hüten, Schuhen, insbesondere Schuhschäften und Sportbekleidung aller Art. Ein weiterer Gegenstand der vorliegenden Erfindung sind Bekleidungsstücke, beispielsweise Jacken, Hosen, Mäntel, Hüte, Schuhe, insbesondere Schuhschäfte, und Sportbekleidung aller Art, hergestellt unter Verwendung von mindestens einem erfindungsgemäßen Verbundmaterial.

Die Erfindung wird durch Arbeitsbeispiele weiter erläutert.
I. Herstellung der Ausgangsmaterialien
I.1 Herstellung einer wässrigen Polyurethandispersion Disp.1

In einem Rührgefäß vermischte man unter Rühren: 7 Gew.-% einer wässrigen Dispersion (Partikeldurchmesser: 125 nm, Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), sowie 3 Gew.-% einfach methyliertem Polyethylenglykol (c.1) sowie 3 Gew.-% H2N-CH2CN2-NH-CH2CH2-COOH, Gew.-% jeweils bezogen auf Polyesterdiol (b1.1),
Erweichungspunkt von weichem Polyurethan (PU1.1): 62°C, Erweichung beginnt bei 55°C, Shore-Härte A 54,
65 Gew.-% einer wässrigen Dispersion (Partikeldurchmesser: 150 nm) eines harten Polyurethans (PU2.2), erhältlich durch Umsetzung von Isophorondiisocyanat (a1.2), 1,4-Butandiol, 1,1-Dimethylolpropionsäure, Hydrazinhydrat und Polypropylenglykol mit einem Molekulargewicht M_{w} von 4200 g/mol, Erweichungspunkt von 195°C, Shore-Härte A 86,
3,5 Gew.-% einer 70 Gew.-% Lösung (in Propylencarbonat) von Verbindung (V.1), 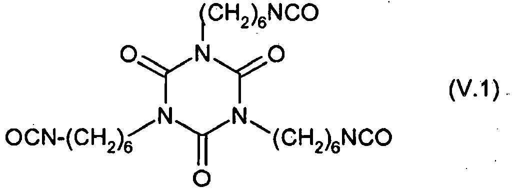 6 Gew.-% einer 65 Gew.-% wässrigen Dispersion der Silikonverbindung nach Beispiel 2 aus EP-A 0 738 747 (f.1)
2 Gew.-% Ruß,
0,5 Gew.-% eines Verdickungsmittels auf Polyurethanbasis,
1 Gew.-% Mikrohohlkugeln aus Polyvinylidenchlorid, gefüllt mit Isobutan, Durchmesser 20 µm, kommerziell erhältlich z. B. als Expancel® der Fa. Akzo Nobel.

Man erhielt wässrige Dispersion Disp.1 mit einem Feststoffgehalt von 35% und einer kinematischen Viskosität von 25 Sek. bei 23°C, bestimmt nach DIN EN ISO 2431, Stand Mai 1996.

### I.2 Herstellung einer wässrigen Formulierung Disp.2

In einem Rührgefäß vermischte man unter Rühren:
7 Gew.-% einer wässrigen Dispersion (Partikeldurchmesser: 125 nm), Feststoffgehalt: 40%) eines weichen Polyurethans (PU1.1), hergestellt aus Hexamethylendiisocyanat (a1.1) und Isophorondiisocyanat (a1.2) im Gew.-Verhältnis 13:10 als Diisocyanate und und als Diole einem Polyesterdiol (b1.1) mit einem Molekulargewicht M_{w} von 800 g/mol, hergestellt durch Polykondensation von Isophthalsäure, Adipinsäure und 1,4-Dihydroxymethylcyclohexan (Isomerengemisch) in einem Molverhältnis von 1:1:2, 5 Gew.-% 1,4-Butandiol (b1.2), 3 Gew.-% einfach methyliertem Polyethylenglykol (c.1) sowie 3 Gew.-% H₂N-CH₂CH₂-NH-CH₂CH₂-COOH, Gew.-% jeweils bezogen auf Polyesterdiol (b1.1),
   Erweichungspunkt von 62°C, Erweichung beginnt bei 55°C, Shore-Härte A 54,
   65 Gew.-% einer wässrigen Dispersion (Partikeldurchmesser: 150 nm) eines harten Polyurethans (α2.2), erhältlich durch Umsetzung von Isophorondiisocyanat (a1.2), 1,4-Butandiol (PU1.2), 1,1-Dimethylolpropionsäure, Hydrazinhydrat und Polypropylenglykol mit einem Molekulargewicht M_{w} von 4200 g/mol (b1.3), Polyurethan (PU2.2) hatte einen Erweichungspunkt von 195°C, Shore-Härte A 90,
   3,5 Gew.-% einer 70 Gew.-% Lösung (in Propylencarbonat) von Verbindung (V.1), NCO-Gehalt 12%,
   2 Gew.-% Ruß.

Man erhielt eine Polyurethandispersion Disp.2 mit einem Feststoffgehalt von 35% und einer kinematischen Viskosität von 25 Sek., bestimmt nach bei 23°C nach DIN EN ISO 2431, Stand Mai 1996.

### II. Herstellung einer Matrize

Ein flüssiges Silikon wurde auf eine Unterlage gegossen, die das Muster eines vollnarbigen Kalbsleders aufwies. Man ließ aushärten, indem man eine Lösung von Di-n-butylbis(1-oxoneodecyloxy)stannan als 25 Gew.-% Lösung in Tetraethoxysilan als sauren Härter dazu gab, und erhielt eine im Mittel 2 mm starke Silikonkautschukschicht, die als Matrize diente. Die Matrize wurde auf einen 1,5 mm dicken Aluminiumträger aufgeklebt.

### III. Auftragung von wässrigen Polyurethandispersionen auf Matrize aus II.

Die Matrize aus II. wurde auf eine beheizbare Unterlage gelegt und auf 91°C erwärmt. Anschließend wurde durch eine Sprühdüse Disp.1 aufgesprüht, und zwar 88 g/m² (nass). Das Auftragen erfolgte ohne Luftbeimengung mit einer Sprühdüse, die einen Durchmesser von 0,46 mm besaß, bei einem Druck von 65 bar. Man ließ bei 91°C verfestigen, bis die Oberfläche nicht mehr klebrig war.

Die Sprühdüse war in einer Höhe von 20 cm von der durchlaufenden Unterlage in Bewegungsrichtung derselben mobil angeordnet und bewegte sich quer zu der Bewegungsrichtung der Unterlage. Die Unterlage hatte nach etwa 14 Sekunden die Sprühdüse passiert und besaß eine Temperatur von 59°C. Nach einer etwa zweiminütigen Beaufschlagung mit trockener, 85°C warmer Luft war der so hergestellte, netzartig aussehende Polyurethanfilm (C.1) nahezu wasserfrei.

In einer analogen Anordnung wurde unmittelbar im Anschluss auf die so beschichtete Matrize 50 g/m² nass von Disp.2 als Verbindungsschicht (B.1) aufgetragen und anschließend trocknen gelassen.

Man erhielt eine mit Polyurethanfilm (C.1) und Verbindungsschicht (B.1) beschichtete Matrize.

Ein Narbenleder (D.1) auf Basis eines Chrom-gegerbten Rindsleders mit einer Dicke von 5 mm wurde mit Disp.2 besprüht, und zwar mit 30 g/m² (nass). Man ließ das so besprühte Narbenleder mehrere Minuten antrocknen.

### IV. Herstellung eines erfindungsgemäßen mehrschichtigen Verbundmaterials

Anschließend wird das besprühte Narbenleder (D.1) mit der besprühten Seite auf die noch warme Verbindungsschicht (B.1), die sich zusammen mit Polyurethanfilm (C.1) auf der Matrize befindet, gelegt und in einer Presse bei 4 bar und 110°C für 15 Sekunden verpresst. Die Matrize wurde durch Abziehen entfernt.

Danach befestigt man eine gereckte Polytetrafluorethylenfolie (A.1), die Poren mit einem mittleren Durchmesser von 30 µm aufweist, durch punktuelles Verkleben und Vernähen mit der Innenseite des beschichteten Narbenleders (D.1).

Das so erhaltene erfindungsgemäße mehrschichtige Verbundmaterial MSV.1 zeichnet sich aus durch eine angenehme Haptik, eine Optik, die identisch mit einer Lederoberfläche ist, sowie Atmungsaktivität aus. Außerdem lässt sich das erfindungsgemäße mehrschichtige Verbundmaterial MSV.1 leicht von Verschmutzungen wie beispielsweise Staub reinigen und ist undurchlässig gegenüber Wasser in flüssigem Aggregatszustand.

MSV.1 eignet sich gut zur Herstellung von Jacken oder Schuhschäften.

## Patentansprüche

1. Mehrschichtiges Verbundmaterial, umfassend als Komponenten:
(A) eine Kunststofffolie mit einer Wasserdampfdurchlässigkeit von mehr als 1 mg/cm²h, gemessen nach DIN 53333,
(B) gegebenenfalls mindestens eine Verbindungsschicht und
(C) eine Polyurethanschicht, die Kapillaren mit einem mittleren Durchmesser im Bereich von 0,005 bis 0,05 mm aufweist, die über die gesamte Dicke der Polyurethanschicht gehen,
wobei wasserdampfdurchlässige Kunststofffolien (A) gewählt werden aus Folien aus fluorierten Polymeren und aus chemisch modifizierten Polyestern, **dadurch gekennzeichnet, dass** die Polyurethanschicht (C) eine Musterung aufweist, die die Musterung eines Leders, eines Nubukleders, einer Samtoberfläche oder einer Holzoberfläche wiedergibt.

2. Mehrschichtiges Verbundmaterial nach Anspruch 1, **dadurch gekennzeichnet, dass** es sich bei der Verbindungsschicht (B) um eine Schicht eines gehärteten organischen Klebstoffs handelt.

3. Mehrschichtiges Verbundmaterial nach einem der Ansprüche 1 bis 2, umfassend weiterhin eine Zwischenschicht (D), gewählt aus Leder, Textil, Papier und Vliesstoffen.

4. Mehrschichtiges Verbundmaterial nach einem der Ansprüche 1 bis 3, **dadurch gekennzeichnet, dass** die Polyurethanschicht (C) Härchen mit einer mittleren Länge von 20 bis 500 µm aufweist.

5. Mehrschichtiges Verbundmaterial nach einem der Ansprüche 1 bis 4, **dadurch gekennzeichnet, dass** es sich bei der Verbindungsschicht (B) um eine durchbrochene Schicht eines gehärteten organischen Klebstoffs handelt.

6. Mehrschichtiges Verbundmaterial nach einem der Ansprüche 1 bis 5, **dadurch gekennzeichnet, dass** es sich bei fluorierten Polymeren um Polytetrafluorethylen handelt.

7. Verfahren zur Herstellung von mehrschichtigen Verbundmaterialien umfassend als Komponenten:
(A) eine Kunststofffolie mit einer Wasserdampfdurchlässigkeit von mehr als 1 mg/cm²h, gemessen nach DIN 53333,
(B) gegebenenfalls mindestens eine Verbindungsschicht und
(C) eine Polyurethanschicht, die Kapillaren mit einem mittleren Durchmesser im Bereich von 0,005 bis 0,05 mm aufweist, die über die gesamte Dicke der Polyurethanschicht gehen,
wobei wasserdampfdurchlässige Kunststofffolien (A) gewählt werden aus Folien aus fluorierten Polymeren und aus chemisch modifizierten Polyestern,
**dadurch gekennzeichnet, dass** man mit Hilfe einer Matrize eine Polyurethanschicht (C) bildet, wobei man hierzu eine wässrige Formulierung von Polyurethan auf die Matrize aufbringt und wobei die Matrize auf Temperaturen von mindestens 80°C erwärmt ist wenn man die Formulierung von Polyurethan aufbringt, mindestens einen organischen Klebstoff vollflächig oder partiell auf Kunststofffolie (A) und/oder auf Polyurethanschicht (C) aufbringt und dann Polyurethanschicht (C) mit wasserdampfdurchlässiger Kunststofffolie (A) punktförmig, streifenartig oder flächig verbindet.

8. Verfahren nach Anspruch 7, wobei die Polyurethanschicht (C) eine Musterung aufweist, die die Musterung eines Leders, eines Nubukleders, einer Samtoberfläche oder einer Holzoberfläche wiedergibt.

9. Verfahren nach einem der Ansprüche 7 bis 8, wobei es sich bei fluorierten Polymeren um Polytetrafluorethylen handelt

10. Verfahren nach einem der Ansprüche 7 bis 9, **dadurch gekennzeichnet, dass** man Polyurethanschicht (C) mit Hilfe einer Silikonmatrize bildet.

11. Verfahren nach Anspruch 10, **dadurch gekennzeichnet, dass** es sich bei der Silikonmatrize um eine mit Hilfe von Lasergravur strukturierte Silikonmatrize handelt.

12. Verfahren nach einem der Ansprüche 7 bis 11, **dadurch gekennzeichnet dass** man zur Strukturierung der Matrize mit Hilfe eines Lasers Näpfchen in die Matrize einarbeitet, die eine mittlere Tiefe im Bereich von 50 bis 250 µm und einen Mittenabstand im Bereich von 50 bis 250 µm aufweisen.

13. Verfahren nach einem der Ansprüche 7 bis 12, **dadurch gekennzeichnet, dass** man eine Zwischenschicht (D) zwischen Kunststofffolie (A) und Verbindungsschicht (B), zwischen Verbindungsschicht (B) und Polyurethanschicht (C) oder zwischen zwei Verbindungsschichten (B) platziert.

14. Verwendung von mehrschichtigen Verbundmaterialien nach einem der Ansprüche 1 bis 6 oder hergestellt nach Ansprüchen 7 bis 12 als Verpackungsmaterial.

15. Verpackungsmaterialien, bestehend aus oder hergestellt unter Verwendung von mehrschichtigen Verbundmaterialien nach einem der Ansprüche 1 bis 6 oder hergestellt nach Ansprüchen 7 bis 12.

16. Verwendung von mehrschichtigen Verbundmaterialien nach einem der Ansprüche 1 bis 6 oder hergestellt nach Ansprüchen 7 bis 12 als Bestandteil von Bekleidungsstücken.

17. Bekleidungsstücke, hergestellt unter Verwendung von mehrschichtigen Verbundmäterialien nach einem der Ansprüche 1 bis 6 oder hergestellt nach Ansprüchen 7 bis 12.

## Claims

1. A multilayered composite material comprising as components:
(A) a plastics foil having a water vapor permeability of more than 1 mg/cm²h, measured according to German standard specification DIN 53333,
(B) optionally at least one bonding layer and
(C) a polyurethane layer with capillaries having an average diameter in the range from 0.005 to 0.05 mm passing through the entire thickness of the polyurethane layer,
water vapor permeable plastics foils (A) being selected from self-supporting films/sheets of fluorinated polymers and of chemically modified polyesters, wherein the polyurethane layer (C) exhibits patterning which reproduces the patterning of a leather, of a nubuck leather, of a velvet surface or of a wood surface.

2. The multilayered composite material according to claim 1 wherein said bonding layer (B) comprises a layer of a cured organic adhesive.

3. The multilayered composite material according to either of claims 1 and 2 which further comprises an interlayer (D) selected from leather, textile, paper and batt materials.

4. The multilayered composite material according to any one of claims 1 to 3 wherein said polyurethane layer (C) has small hairs having an average length of from 20 to 500 µm.

5. The multilayered composite material according to any one of claims 1 to 4 wherein the bonding layer (B) comprises an interrupted layer of a cured organic adhesive.

6. The multilayered composite material according to any one of claims 1 to 5 wherein fluorinated polymers comprise polytetrafluoroethylene.

7. A process for producing a multilayered composite material comprising as components:
(A) a plastics foil having a water vapor permeability of more than 1 mg/cm²h, measured according to German standard specification DIN 53333,
(B) optionally at least one bonding layer and
(C) a polyurethane layer with capillaries having an average diameter in the range from 0.005 to 0.05 mm passing through the entire thickness of the polyurethane layer,
water vapor permeable plastics foils (A) being selected from self-supporting films/sheets of fluorinated polymers and of chemically modified polyesters, which process comprises forming a polyurethane layer (C) with the aid of a mold, wherein for this purpose an aqueous formulation of polyurethane is applied to the mold and wherein the mold has been preheated to temperatures of at least 80°C when the formulation of polyurethane is applied, applying at least one organic adhesive uniformly or partially onto plastics foil (A) and/or onto polyurethane layer (C) and then bonding polyurethane layer (C) pointwise, stripwise or areawise to water vapor permeable plastics foil (A).

8. The process according to claim 7 wherein polyurethane layer (C) exhibits patterning which reproduces the patterning of a leather, of a nubuck leather, of a velvet surface or of a wood surface.

9. The process according to either of claims 7 and 8 wherein fluorinated polymers comprise polytetrafluoroethylene.

10. The process according to any one of claims 7 to 9 wherein polyurethane layer (C) is formed with the aid of a silicone mold.

11. The process according to claim 10 wherein said silicone mold comprises a silicone mold structured with the aid of laser engraving.

12. The process according to any one of claims 7 to 11 wherein said mold is structured by using a laser to cut wells into the mold which have an average depth in the range from 50 to 250 µm and a center-to-center spacing in the range from 50 to 250 µm.

13. The process according to any one of claims 7 to 12 wherein an interlayer (D) is placed between plastics foil (A) and bonding layer (B), between bonding layer (B) and polyurethane layer (C), or between two bonding layers (B).

14. The use of a multilayered composite material according to any one of claims 1 to 6 or obtained according to claims 7 to 12 as a packaging material.

15. A packaging material consisting of or obtained using a multilayered composite material according to any one of claims 1 to 6 or obtained according to claims 7 to 12.

16. The use of a multilayered composite material according to any one of claims 1 to 6 or obtained according to claims 7 to 12 as a constituent of an apparel piece.

17. An apparel piece obtained by using a multilayered composite material according to any one of claims 1 to 6 or obtained according to claims 7 to 12.

## Revendications

1. Matériau composite multicouche, comprenant en tant que composants :
(A) un film de matière plastique ayant une perméabilité à la vapeur d'eau de plus de 1 mg/cm²h, mesurée selon DIN 53333,
(B) éventuellement au moins une couche de liaison et
(C) une couche de polyuréthane, qui comprend des capillaires d'un diamètre moyen dans la plage allant de 0,005 à 0,05 mm, qui traversent l'épaisseur totale de la couche de polyuréthane,
les films de matière plastique perméables à la vapeur d'eau (A) étant choisis parmi les films en polymères fluorés et en polyesters modifiés chimiquement, **caractérisé en ce que** la couche de polyuréthane (C) présente un motif qui reproduit le motif d'un cuir, d'un nubuck, d'une surface en velours ou d'une surface en bois.

2. Matériau composite multicouche selon la revendication 1, **caractérisé en ce que** la couche de liaison (B) est une couche d'un adhésif organique durci.

3. Matériau composite multicouche selon l'une quelconque des revendications 1 à 2, comprenant en outre une couche intermédiaire (D) choisie parmi le cuir, le textile, le papier et les non-tissés.

4. Matériau composite multicouche selon l'une quelconque des revendications 1 à 3, **caractérisé en ce que** la couche de polyuréthane (C) comprend des poils d'une longueur moyenne de 20 à 500 µm.

5. Matériau composite multicouche selon l'une quelconque des revendications 1 à 4, **caractérisé en ce que** la couche de liaison (B) est une couche ajourée d'un adhésif organique durci.

6. Matériau composite multicouche selon l'une quelconque des revendications 1 à 5, **caractérisé en ce que** les polymères fluorés sont le polytétrafluoroéthylène.

7. Procédé de fabrication de matériaux composites multicouches comprenant en tant que composants :
(A) un film de matière plastique ayant une perméabilité à la vapeur d'eau de plus de 1 mg/cm²h, mesurée selon DIN 53333,
(B) éventuellement au moins une couche de liaison et
(C) une couche de polyuréthane, qui comprend des capillaires d'un diamètre moyen dans la plage allant de 0,005 à 0,05 mm, qui traversent l'épaisseur totale de la couche de polyuréthane,
les films de matière plastique perméables à la vapeur d'eau (A) étant choisis parmi les films en polymères fluorés et en polyesters modifiés chimiquement, **caractérisé en ce qu'**une couche de polyuréthane (C) est formée à l'aide d'une matrice, une formulation aqueuse de polyuréthane étant pour cela appliquée sur la matrice et la matrice étant portée à des températures d'au moins 80 °C lors de l'application de la formulation de polyuréthane, au moins un adhésif organique est appliqué sur l'ensemble ou sur une partie de la surface du film de matière plastique (A) et/ou de la couche de polyuréthane (C), puis la couche de polyuréthane (C) est reliée de manière ponctuelle, en bandes ou sur l'ensemble de la surface avec le film de matière plastique perméable à la vapeur d'eau (A).

8. Procédé selon la revendication 7, dans lequel la couche de polyuréthane (C) présente un motif qui reproduit le motif d'un cuir, d'un nubuck, d'une surface en velours ou d'une surface en bois.

9. Procédé selon l'une quelconque des revendications 7 à 8, dans lequel les polymères fluorés sont le polytétrafluoroéthylène.

10. Procédé selon l'une quelconque des revendications 7 à 9, **caractérisé en ce que** la couche de polyuréthane (C) est formée à l'aide d'une matrice de silicone.

11. Procédé selon la revendication 10, **caractérisé en ce que** la matrice de silicone est une matrice de silicone structurée par gravure laser.

12. Procédé selon l'une quelconque des revendications 7 à 11, **caractérisé en ce que**, pour la structuration de la matrice à l'aide d'un laser, des alvéoles sont incorporées dans la matrice, qui présentent une profondeur moyenne dans la plage allant de 50 à 250 µm et une distance des centres dans la plage allant de 50 à 250 µm.

13. Procédé selon l'une quelconque des revendications 7 à 12, **caractérisé en ce qu'**une couche intermédiaire (D) est placée entre le film de matière plastique (A) et la couche de liaison (B), entre la couche de liaison (B) et la couche de polyuréthane (C) ou entre deux couches de liaison (B).

14. Utilisation de matériaux composites multicouches selon l'une quelconque des revendications 1 à 6 ou fabriqués selon les revendications 7 à 12 en tant que matériau d'emballage.

15. Matériaux d'emballage, constitués par ou fabriqués en utilisant des matériaux composites multicouches selon l'une quelconque des revendications 1 à 6 ou fabriqués selon les revendications 7 à 12.

16. Utilisation de matériaux composites multicouches selon l'une quelconque des revendications 1 à 6 ou fabriqués selon les revendications 7 à 12 en tant que constituant de vêtements.

17. Vêtements, fabriqués en utilisant des matériaux composites multicouches selon l'une quelconque des revendications 1 à 6 ou fabriqués selon les revendications 7 à 12.
